# EUROPEAN PATENT SPECIFICATION

(11) **EP 1 432 188 B1**
(45) Date of publication and mention of the grant of the patent: **02.11.2006**
(21) Application number: 03257380.0
(22) Date of filing: 21.11.2003
(51) Int. Cl.: H04L 12/58, H04N 1/00

(54) **Email client and email facsimile machine**
E-mailklient und E-mailfaxgerät
Client courriel et dispositif fac-similé

(30) Priority: 16.12.2002 KR 2002080510
(43) Date of publication of application: 23.06.2004
(73) Proprietor: SAMSUNG ELECTRONICS CO., LTD., Suwon-City, Kyungki-do (KR)
(72) Inventor: Kim, Young-hoon, Yongin-city, Gyunggi-do (KR)
(74) Representative: Geary, Stuart Lloyd

(56) References cited:
- EP-A- 1 030 508
- WO-A-02/13074
- US-A- 2002 131 089
- US-A1- 2002 107 929
- RESNICK P: "Request For Comments 2822: Internet Message Format" NETWORK WORKING GROUP, April 2001 (2001-04), XP002270213
- TANENBAUM A: "Computer Networks, Third edition" 30 June 1996 (1996-06-30) , PRENTICE HALL , UPPER SADDLE RIVER, NEW JERSEY XP002270214 * page 662, line 1 - page 663, line 28 *

## Description

The present invention relates to an email facsimile machine.

Generally, an email facsimile machine is a machine comprising a scanner, a printer and an email client. Scanned documents can be transmitted in emails by the email client and documents in emails received by the email client can be printed.

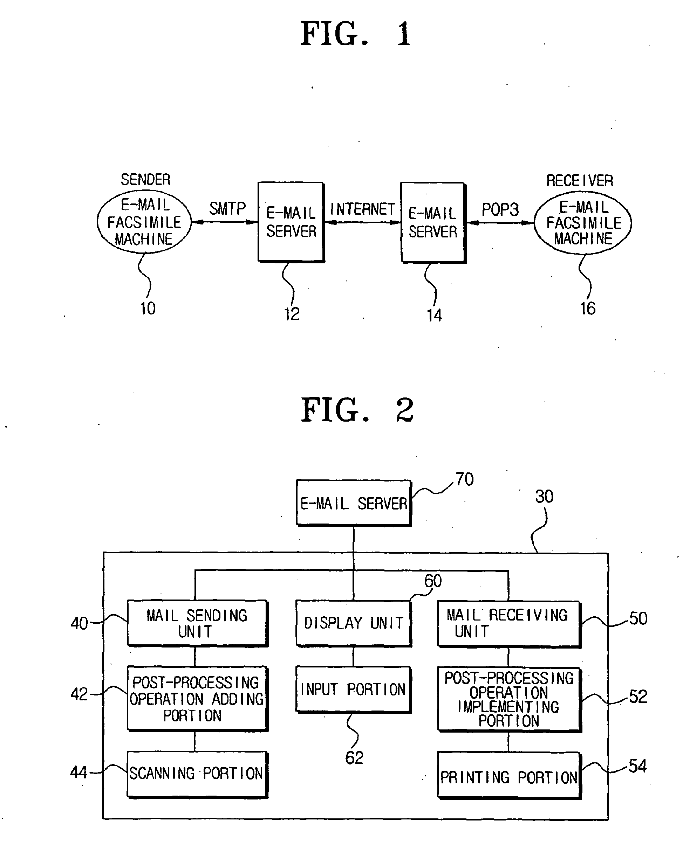

An email facsimile machine connected to the Internet is shown in Figure 1.

Referring to Figure 1, email facsimile machines 10, 16 can communicate with first and second mail server machines 12, 14 respectively and the mail server machines 12, 14 can communicate with each other through the Internet. The first mail server machine 12 provides an SMTP server and may also provide POP3 and/or IMAP servers. The second mail server machine 14 provides a POP3 server and may also provide an SMTP server and, optionally, an IMAP server.

Accordingly, when the sender email facsimile machine 10 sends an email, the email is transmitted to the SMTP server on the first mail server machine 12 and then the SMTP server transmits the email to the second mail server machine 14 through the Internet. At the second mail server machine 14, a mail delivery agent (MDA) delivers the email to the recipient's mailbox on the second server machine 14. The receiver email facsimile machine 16 downloads the email from the receiver's mailbox on the second mail server 14 and prints out the email on paper.

Email facsimile machines are further known, as disclosed in US 2002/0131089, which include processing instructions in an email to instruct a receiving machine to carry out certain operations. These can include printing the content of a received email or faxing the content of a received email to a telephone number.

However, this type of email facsimile machine does not allow the sender email facsimile machine to perform email post-processing. For example, the sender email facsimile machine cannot perform a process with respect to an email that is stored in the receiver mail server after the email has been received by the receiver email facsimile machine.

That is, when a sender wishes to delete an email that is stored on the receiver email server machine after the email has been received by the second email server machine, the sender is unable to do so because the sender email facsimile machine is not enabled to perform email post-processing, such as deleting an email stored in the receiver email server.

EP-A-1030508 discloses an email facsimile machine. US-A-2002/0107929 discloses using email headers to coordinate message storage arrangements in a workgroup. WO 02/13074 A1 discloses transfer of active information in non-standard email headers.

An email facsimile machine according to claims 1 and 14 of the present invention is characterised in that the processing instruction included in an email is an instruction to communicate with a mail server (70) to perform an associated operation, wherein said operation comprises forwarding the email to an email address specified as a parameter of said processing instruction or deleting the email from a mailbox on the mail server (70) from which the email was downloaded.

A method for sending an email facsimile according to the invention is set out in claim 18.

A method for receiving an email facsimile according to the invention is set out in claim 22.

Additional preferred and optional features of the present invention are set forth in claims 2 to 13, 15 to 17, 19 to 21 and 23 to 26.

An embodiment of the present invention will now be described, by way of example, with reference to Figures 2 to 4 of the accompanying drawings, in which:
Figure 1 is a block diagram of a conventional email facsimile system;
Figure 2 is a block diagram of an email facsimile machine capable of post-processing according to the present invention;
Figure 3 is a flowchart illustrating a first email facsimile post-processing method according to the present invention; and
Figure 4 is a flowchart illustrating a second email facsimile post-processing method according to the present invention.

Referring to Figure 2, an email facsimile machine 30, which includes a mail sending unit 40, a mail receiving unit 50 and a display unit 60, is capable of communicating with a mail server 70.

The mail sending unit 40, which scans a document to convert it to an email, includes a post-processing operation adding portion 42 and a scanning portion 44. The scanning portion 44, which is a conventional facsimile machine scanning portion, scans in a document to be sent using a scanning sensor and creates image data representing the scanned document. The mail sending unit 40 prepares an email using the image data, created by the scanning portion 44, and email addresses input by a user. The image data may included in the body of the email itself, e.g. is optical character recognition is used to produce text from the image data, and/or as an attachment. Additionally, the email address of a receiver is processed so that the email address is included in the To header of the email to be sent.

The email header collection includes information regarding how the email server 70 and the email facsimile machine 30, acting as a client of the email server 70, process the email as received and/or sent. The email header collection is divided into standard headers (RFC2822) and a non-standard header. The standard headers include: email addresses of the sender and the receiver, the time of sending of the email and the name of the email server of the received email.

The post-processing operation adding portion 42 adds a specific post-processing operation to an email to be sent by a sender. By implementing the post-processing, after sending the email, a sender can process the email after the email has been saved on the email server holding the mailbox of the receiving facsimile machine the receiver. For example, the email processing includes various processing operations such as deleting emails stored on the email server, forwarding the stored email to another email address, and other operations in relation to the email, which the sender is allowed to perform in relation to the sender's sent email.

The post-processing operation adding portion 42 adds the post-processing operation by including a command to implement a specific post-processing operation in the non-standard header of the email header collection. For example, in a situation where the sender wants to delete the email stored in the email server, the command "X-PostProcessing: delete" is included a the non-standard header, and in a case where the sender wants to forward the received email to another email address, the command, "X-PostProcessing: mailto: abc@samsung.com", is included as the non-standard header.

Because a selection with regard to the post-processing operation is output to the display unit 60, the sender can select a post-processing operation, as the sender wants. In addition, if the post-processing is a forwarding process, the sender is allowed to input the email address to which the email is to be forwarded through an input portion 62 attached to the display unit 60.

The mail receiving unit 50, which receives emails downloaded from the email server 70 for printing out the contents of the email, includes a post-processing operation implementing portion 52 and a printing portion 54.

The post-processing operation implementing portion 52 determines whether a post-processing operation is included in a non-standard header of the received email. Upon determining that the post-processing operation is included, the post-processing operation implementing portion 52 processes the email stored in the email server 70 according to the content of the non-standard header. For example, in a case where the post-processing operation is deleting, the post-processing operation implementing portion 52 sends a signal to the email server 70 to delete the email stored in the email sever 70 after printing out the email. Moreover, in a case where the post-processing operation is forwarding, the post-processing operation implementing portion 52 sends a signal to the email server 70 to forward the email to an email address recorded in the non-standard header.

The printing portion 54, which is a conventional facsimile printing portion, prints out the contents of emails received through the mail receiving unit 50 on paper.

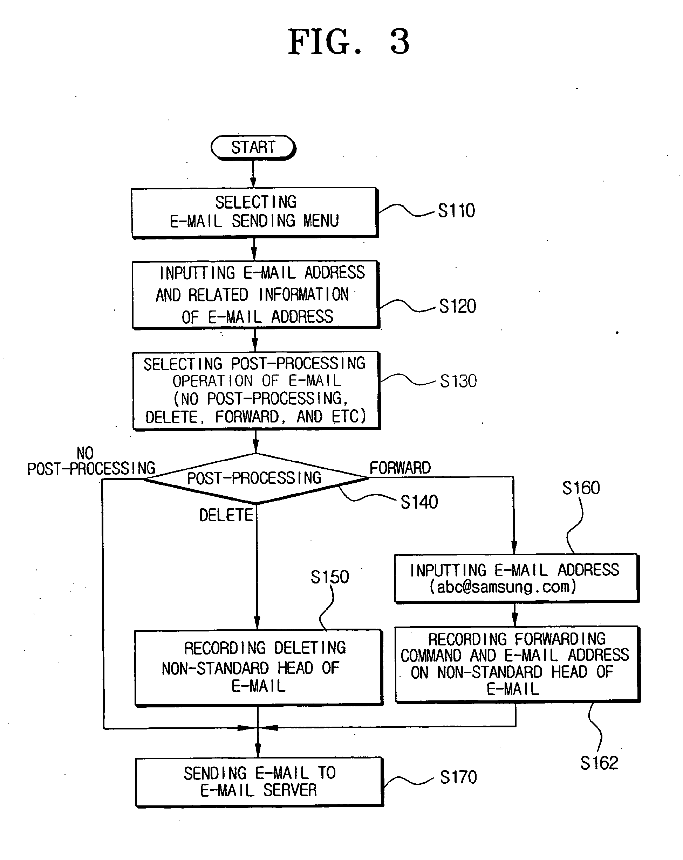

Hereinafter, with reference to Figure 3, an email facsimile post-processing method in which the above-described email facsimile machine adds a post-processing operation is described.

First, a sender selects an email sending menu using the input portion 62 (S110). Upon selecting the email sending menu, the sender inputs an email address of a receiver and other related information of the email using the input portion 62 (S120).

Upon inputting the email address and related information of the email, the sender selects a post-processing operation to be sent through the display unit 60 (S130). A menu displayed on the display unit 60 includes "no post-processing", "delete", "forward" or other email related operations (S140).

If "delete" is selected as the post-processing operation, the post-processing operation adding portion 42 records a deleting command on the non-standard head of the email (S150). Alternatively, if "forward" is selected as the post-processing operation, the display unit displays a message "please input email address" whereupon the sender inputs an email address (S160). When the email address is input, the post-processing operation adding portion 42 includes a forwarding command and the email address in the non-standard header of the email (S162). Once the email address has been entered, the mail sending unit 40 prepares an email by incorporating document information scanned via the scanning portion 44, the non-standard header created by the post-processing operation adding portion 42, and sends the email to the email server 70 (S170).

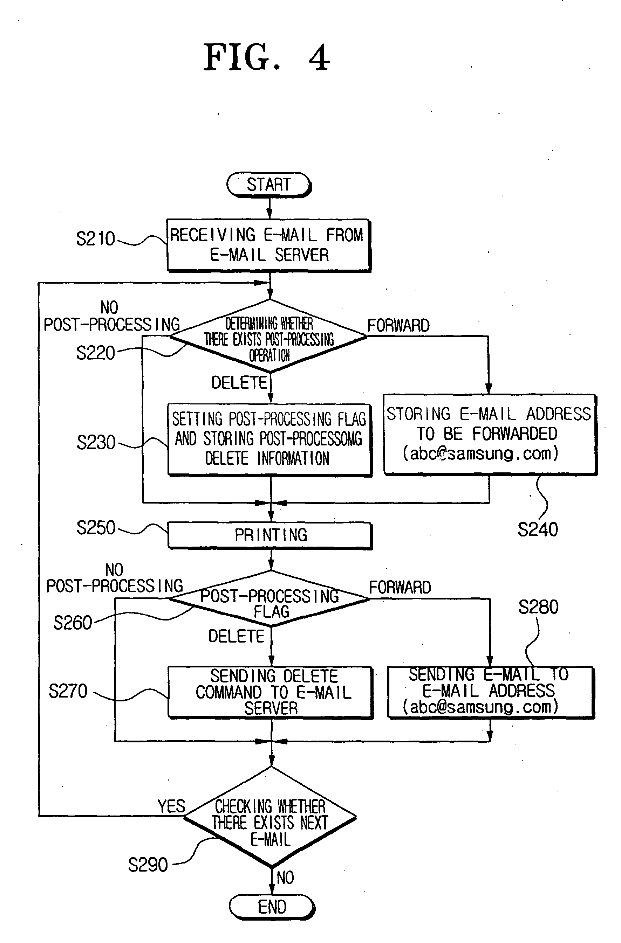

An email facsimile post-processing method will now be described with reference to Figure 4.

The receiving unit 50 of email facsimile machine 30 downloads email addressed to it from the email server 70 at predetermined times (S210).

When the mail receiving unit 50 receives the email, the post-processing operation implementing portion 52 determines whether there exists a post-processing instruction in the received email (S220). At this point, the post-processing operation implementing portion 52 determines the presence or the absence of the post-processing by checking for the non-standard header in the email.

In the absence of a post-processing instruction, the mail receiving unit 50 controls the printing portion 54 to perform a printing (S250), and checks whether there exists another email (S290).

In the case of the presence of a post-processing instruction, the post-processing operation implementing unit 50 sets a post-processing flag and stores the post-processing information. In the case where the post-processing operation is "delete", the post-processing operation implementing unit 50 stores delete information (S230) and, in the case where the post-processing operation is "forward", the post-processing operating implementing unit 50 stores the email address that the email is to be forwarded to (S240).

Then, the mail receiving unit 50 controls the printing portion 54 to perform a printing operation (S250) and controls the post-processing operation implementing portion 52 to implement the post-processing operation by checking the post-processing flag after the printing (S260). For example, when the post-processing flag is "delete", the post-processing operation implementing portion 52 sends a delete command to the email server 70 (S270). When the post-processing flag is "forward", the post-processing operation implementing portion 52 sends to the email server 70 a command to forward the email to the stored email address or forwards the email itself via the SMTP server of email server 70 (S280).

Next, the mail receiving unit 50 checks whether there is another email in the email server 70. Upon determining that there is another email, the above-described process is repeated (S290). Upon determining that there is no other email to be received, the email receiving operation is completed.

The email facsimile machine capable of post-processing according to an aspect of the present invention allows a sender to perform a post-processing operation with respect to an email received by the email server of a receiver and stored, comprising deleting the email, forwarding the email to another email address or other email related operations.

In addition, according to the email post-processing method as described above, a sender is able to perform a post-processing operation with respect to the email received by the email server of a receiver and stored, comprising deleting the email, forwarding the email to another email address, other email related operations.

## Claims

1. An email facsimile machine comprising processing means (40, 42, 50, 52) wherein said processing means is configured for detecting a processing instruction in a received email and for responding to detection of said processing instruction by operating in dependence of said processing instruction, **characterised in that** the processing instruction is an instruction to communicate with a mail server (70) to perform an associated operation, wherein said operation comprises forwarding the email to an email address specified as a parameter of said processing instruction or deleting the email from a mailbox on the mail server (70) from which the email was downloaded.

2. An email facsimile machine according to claim 1, wherein the processing means (40, 42, 50, 52) is configured for retrieving emails from a server (70) using a pulldown protocol.

3. An email facsimile machine according to claim 2, wherein said pulldown protocol is IMAP or POP3.

4. An email facsimile machine according to claim 2 or 3, wherein the processing means (40, 42, 50, 52) is configured to respond to a predetermined processing instruction by sending a message delete command to the server (70) from which the email was downloaded.

5. An email facsimile machine according to any preceding claim, wherein the processing means (40, 42, 50, 52) is configured to detect processing instructions in non-standard email headers.

6. An email facsimile machine according to claim 5, wherein the email facsimile machine is configured for receiving email messages conforming to RFC2822.

7. An email facsimile machine according to claim 5, wherein the processing means (40, 42, 50, 52) is configured such that a header identified as non-standard is a header not having a function defined in RFC2822.

8. An email facsimile machine according to any preceding claim, including printing means (54), wherein the processing means (40, 42, 50, 52) is configured to print content of a received email before performing an operation specified by a processing instruction header of a received email.

9. An email facsimile machine according to claim 7 or 8, including document scanning means (44), wherein the processing means (40, 42, 50, 52) is configured for sending a document scanned by the document scanning means in an email.

10. An email facsimile machine, according to any preceding claim, comprising:
a scanning portion (44) for scanning documents to produce document image data;
a mail sending unit (40) for generating emails including document image data produced by the scanning means and sending the emails, generated by itself, to the email server (70); and
a post-processing operation adding unit (42) for adding a processing instruction to an email to be sent.

11. An email facsimile machine according to claim 10, wherein the post-processing operation adding unit (42) adds processing instructions in non-standard headers.

12. An email facsimile machine according to claim 11, wherein the mail sending unit is configured for sending email messages conforming to RFC2822.

13. An email facsimile machine according to claim 12, wherein the post-processing operation adding unit (42) is configured such that the non-standard header is a header not having a function defined in RFC2822.

14. An email facsimile machine comprising:
a scanning portion (44) for scanning documents to produce document image data; and
a mail sending unit (40) for generating emails including document image data produced by the scanning portion and sending the emails, generated by itself, to an email server (70); and
a post-processing operation adding unit (42) for adding a processing instruction to an email to be sent,
**characterised in that**
said processing instruction is an instruction to communicate with a mail server (70) to perform an associated operation, wherein said operation comprises forwarding the email to an email address specified as a parameter of said predetermined processing instruction, or deleting the email from a mailbox on the mail server (70) from which the email was downloaded.

15. An email facsimile machine according to claim 14, wherein the post-processing operation adding unit (42) adds processing instructions in non-standard headers.

16. An email facsimile machine according to claim 15, wherein the mail sending unit is configured for sending email messages conforming to RFC2822.

17. An email facsimile machine according to claim 16, wherein the post-processing operation adding unit (42) is configured such that the non-standard header is a header not having a function defined in RFC2822.

18. A method of sending an email facsimile comprising receiving an email sending menu input from a user, receiving an address information user input for an email to be sent, receiving a user input selecting a processing instruction for the email to be sent, receiving input information needed for the selected processing instruction and sending the email to an email server (70), **characterised in that** the selected processing instruction is an instruction to communicate with a mail server (70) to perform an associated operation, wherein said operation comprises forwarding the email to an email address specified as a parameter of said predetermined processing instruction, or deleting the email from a mailbox on the mail server (70) from which the email was downloaded.

19. A method according to claim 18, wherein the user selected processing instruction is added to the email in a non-standard header.

20. A method according to claim 19, wherein the email conforms to RFC2822.

21. A method according to claim 20, wherein the non-standard header is a header not having a function defined in RFC2822.

22. A method of receiving an email facsimile comprising using an email facsimile machine to receive an email from an email server (70) and using the email facsimile machine to check whether there is a processing instruction in the received email and implementing the processing instruction, **characterised in that** said processing instruction is an instruction to communicate with a mail server (70) to perform an associated operation, wherein said operation comprises forwarding the email to an email address specified as a parameter of said predetermined processing instruction, or deleting the email from a mailbox on the mail server (70) from which the email was downloaded.

23. A method according to claim 22, including memorizing the processing instruction and then printing of the email contents before implementing the processing instruction.

24. A method according to claim 22 or 23, comprising checking for a processing instruction in a non-standard header of the received email.

25. A method according to claim 24, wherein the received email conforms to RFC2822.

26. A method according to claim 25, wherein the non-standard header is a header not having a function defined in RFC2822.

## Patentansprüche

1. Email-Faxgerät mit einer Verarbeitungseinrichtung (40, 42, 50, 52), wobei die Verarbeitungseinrichtung ausgelegt ist, eine Verarbeitungsinstruktion in einer empfangenen Email zu erfassen und auf die Erfassung der Verarbeitungsinstruktion durch eine Operation in Abhängigkeit von der Verarbeitungsinstruktion zu reagieren, **dadurch gekennzeichnet, dass** die Verarbeitungsinstruktion eine Instruktion ist, mit einem Email-Server (70) zu kommunizieren, um eine zugehörige Operation durchzuführen, wobei die Operation ein Weiterleiten der Email an eine Email-Adresse, die als ein Parameter der Verarbeitungsinstruktion festgelegt wurde, oder ein Löschen der Email aus einer Mailbox auf dem Email-Server (70), aus dem die Email heruntergeladen wurde, umfasst.

2. Email-Faxgerät nach Anspruch 1, wobei die Verarbeitungseinrichtung (40, 42, 50, 52) ausgelegt ist, Emails von einem Server (70) unter Verwendung eines Pulldown-Protokols abzurufen.

3. Email-Faxgerät nach Anspruch 2, wobei das Pulldown-Protokoll IMAP oder POP3 ist.

4. Email-Faxgerät nach Anspruch 2 oder 3, wobei die Verarbeitungseinrichtung (40, 42, 50, 52) ausgelegt ist, auf eine vorbestimmte Verarbeitungsinstruktion durch Senden eines Nachrichten-Löschbefehls an den Server (70), von dem die Email heruntergeladen wurde, zu reagieren.

5. Email-Faxgerät nach einem der vorhergehenden Ansprüche, wobei die Verarbeitungseinrichtung (40, 42, 50, 52) ausgelegt ist, die Verarbeitungsinstruktionen in nicht standardisierten Email-Headern zu erfassen.

6. Email-Faxgerät nach Anspruch 5, wobei das Email-Faxgerät ausgelegt ist, Email-Nachrichten zu empfangen, die RFC2822 entsprechen.

7. Email-Faxgerät nach Anspruch 5, wobei die Verarbeitungseinrichtung (40, 42, 50, 52) so ausgelegt ist, dass ein Header, der als nicht standardisiert identifiziert wird, ein Header ist, der keine in RFC2822 definierte Funktion aufweist.

8. Email-Faxgerät nach einem der vorhergehenden Ansprüche, umfassend eine Druckeinrichtung (54), wobei die Verarbeitungseinrichtung (40, 42, 50, 52) ausgelegt ist, einen Inhalt einer empfangenen Email auszudrucken, bevor eine Operation ausgeführt wird, die durch einen Verarbeitungsinstruktions-Header einer empfangenen Email festgelegt ist.

9. Email-Faxgerät nach Anspruch 7 oder 8, umfassend eine Dokumentenabtasteinrichtung (44), wobei die Verarbeitungseinrichtung (40, 42, 50, 52) ausgelegt ist, ein Dokument, das von der Dokumentenabtasteinrichtung eingescannt wurde, in einer Email zu versenden.

10. Email-Faxgerät nach einem vorhergehenden Anspruch, umfassend:
einen Abtastbereich (44) zum Abtasten von Dokumenten, um Dokumenten-Bilddaten zu erzeugen;
eine Email-Sendeeinheit (40) zum Erzeugen von Emails einschließlich Dokumenten-Bilddaten, die von der Abtasteinrichtung erzeugt wurden, und Senden der Emails, die von ihr selbst erzeugt wurden, an den Email-Server (70); und
eine Nachverarbeitungsoperations-Hinzufügeeinheit (42) zum Hinzufügen einer Verarbeitungsinstruktion an eine zu sendende Email.

11. Email-Faxgerät nach Anspruch 10, wobei die Nachverarbeitungsoperations-Hinzufügeeinheit (42) Verarbeitungsinstruktionen in nicht standardisierte Header hinzufügt.

12. Email-Faxgerät nach Anspruch 11, wobei die Email-Sendeeinheit ausgelegt ist, Email-Nachrichten, die RFC2822 entsprechen, zu senden.

13. Email-Faxgerät nach Anspruch 12, wobei die Nachverarbeitungsoperations-Hinzufügeeinheit (42) so ausgelegt ist, dass der nicht standardisierte Header ein Header ist, der keine in RFC2822 definierte Funktion aufweist.

14. Email-Faxgerät, umfassend:
einen Abtastbereich (44) zum Abtasten von Dokumenten, um Dokumenten-Bilddaten zu erzeugen; und
eine Email-Sendeeinheit (40) zum Erzeugen von Emails einschließlich Dokumenten-Bilddaten, die von dem Abtastbereich erzeugt wurden, und Senden der Emails, die von ihr selbst erzeugt wurden, an einen Email-Server (70); und
eine Nachverarbeitungsoperations-Hinzufügeeinheit (42) zum Hinzufügen einer Verarbeitungsinstruktion an eine zu sendende Email,
**dadurch gekennzeichnet, dass** die Verarbeitungsinstruktion eine Instruktion ist, mit einem Email-Server (70) zu kommunizieren, um eine zugehörige Operation durchzuführen, wobei die Operation ein Weiterleiten der Email an eine Email-Adresse, die als ein Parameter der vorbestimmten Verarbeitungsinstruktion festgelegt wurde, oder ein Löschen der Email aus einer Mailbox auf dem Email-Server (70), aus dem die Email heruntergeladen wurde, umfasst.

15. Email-Faxgerät nach Anspruch 14, wobei die Nachverarbeitungsoperations-Hinzufügeeinheit (42) Verarbeitungsinstruktionen in nicht standardisierte Header hinzufügt.

16. Email-Faxgerät nach Anspruch 15, wobei die Email-Sendeeinheit ausgelegt ist, Email-Nachrichten, die RFC2822 entsprechen, zu senden.

17. Email-Faxgerät nach Anspruch 16, wobei die Nachverarbeitungsoperations-Hinzufügeeinheit (42) so ausgelegt ist, dass der nicht standardisierte Header ein Header ist, der keine in RFC2822 definierte Funktion aufweist.

18. Verfahren zum Senden eines Emailfaksimiles, umfassend das Empfangen einer Emailsende-Menüeingabe von einem Anwender, Empfangen einer Adresseninformations-Anwendereingabe für eine zu sendende Email, Empfangen einer Anwendereingabe, welche eine Verarbeitungsinstruktion für die zu sendende Email auswählt, Empfangen einer Eingabeinformation, die für die ausgewählte Verarbeitungsinstruktion erforderlich ist, und Senden der Email an einen Email-Server (70), **dadurch gekennzeichnet, dass** die ausgewählte Verarbeitungsinstruktion eine Instruktion ist, mit einem Email-Server (70) zu kommunizieren, um eine zugehörige Operation durchzuführen, wobei die Operation ein Weiterleiten der Email an eine Email-Adresse, die als ein Parameter der vorbestimmten Verarbeitungsinstruktion festgelegt wurde, oder ein Löschen der Email aus einer Mailbox auf dem Email-Server (70), aus dem die Email heruntergeladen wurde, umfasst.

19. Verfahren nach Anspruch 18, wobei die vom Anwender ausgewählte Verarbeitungsinstruktion in einem nicht standardisierten Header zur Email hinzugefügt wird.

20. Verfahren nach Anspruch 19, wobei die Email RFC2822 entspricht.

21. Verfahren nach Anspruch 20, wobei der nicht standardisierte Header ein Header ist, der keine in RFC2822 definierte Funktion aufweist.

22. Verfahren zum Empfangen eines Emailfaksimiles, umfassend die Verwendung eines Email-Faxgeräts zum Empfangen einer Email von einem Email-Server (70) und die Verwendung des Email-Faxgeräts, um zu überprüfen, ob sich eine Verarbeitungsinstruktion in der empfangenen Email befindet, und die Verarbeitungsinstruktion zu implementieren, **dadurch gekennzeichnet, dass** die Verarbeitungsinstruktion eine Instruktion ist, mit einem Email-Server (70) zu kommunizieren, um eine zugehörige Operation durchzuführen, wobei die Operation ein Weiterleiten der Email an eine Email-Adresse, die als ein Parameter der vorbestimmten Verarbeitungsinstruktion festgelegt wurde, oder ein Löschen der Email aus einer Mailbox auf dem Email-Server (70), aus dem die Email heruntergeladen wurde, umfasst.

23. Verfahren nach Anspruch 22, umfassend ein Abspeichern der Verarbeitungsinstruktion und dann Drucken der Emailinhalte vor Implementierung der Verarbeitungsinstruktion.

24. Verfahren nach Anspruch 22 oder 23, umfassend ein Überprüfen auf eine Verarbeitungsinstruktion in einem nicht standardisierten Header der empfangenen Email.

25. Verfahren nach Anspruch 24, wobei die empfangene Email RFC2822 entspricht.

26. Verfahren nach Anspruch 25, wobei der nicht standardisierte Header ein Header ist, der keine in RFC2822 definierte Funktion aufweist.

## Revendications

1. Machine de télécopie de courrier électronique comprenant des moyens de traitement (40, 42, 50, 52), dans laquelle lesdits moyens de traitement sont configurés pour détecter une instruction de traitement dans un courrier électronique reçu et pour répondre à la détection de ladite instruction de traitement en agissant en fonction de ladite instruction de traitement, **caractérisée en ce que** l'instruction de traitement est une instruction pour communiquer avec un serveur de courriers électroniques (70) afin d'effectuer une opération associée, dans laquelle ladite opération comprend le transfert du courrier électronique vers une adresse électronique spécifiée en tant que paramètre de ladite instruction de traitement ou la suppression du courrier électronique d'une boîte aux lettres sur le serveur de courriers électroniques (70) à partir duquel le courrier électronique a été téléchargé.

2. Machine de télécopie de courrier électronique selon la revendication 1, **caractérisée en ce que** les moyens de traitement (40, 42, 50, 52) sont configurés pour récupérer des courriers électroniques d'un serveur (70) en utilisant un protocole 'pulldown'.

3. Machine de télécopie de courrier électronique selon la revendication 2, dans laquelle ledit protocole 'pulldown' est un protocole IMAP ou POP3.

4. Machine de télécopie de courrier électronique selon la revendication 2 ou 3,
**caractérisée en ce que** les moyens de traitement (40, 42, 50, 52) sont configurés pour répondre à une instruction de traitement prédéterminée en envoyant une commande de suppression de message au serveur (70) à partir duquel le courrier électronique a été téléchargé.

5. Machine de télécopie de courrier électronique selon l'une quelconque des revendications précédentes, **caractérisée en ce que** les moyens de traitement (40, 42, 50, 52) sont configurés pour détecter des instructions de traitement dans des en-têtes non normalisés du courrier électronique.

6. Machine de télécopie de courrier électronique selon la revendication 5, **caractérisée en ce que** la machine de télécopie de courrier électronique est configurée pour recevoir des messages de courrier électronique se conformant la norme RFC2822.

7. Machine de télécopie de courrier électronique selon la revendication 5, **caractérisée en ce que** les moyens de traitement (40, 42, 50, 52) sont configurés de sorte qu'un en-tête identifié comme non normalisé soit un en-tête n'ayant pas de fonction définie dans la norme RFC2822.

8. Machine de télécopie de courrier électronique selon l'une quelconque des revendications précédentes, comprenant des moyens d'impression (54), **caractérisée en ce que** les moyens de traitement (40, 42, 50, 52) sont configurés pour imprimer le contenu d'un courrier électronique reçu avant d'effectuer une opération spécifiée par un en-tête d'instruction de traitement d'un courrier électronique reçu.

9. Machine de télécopie de courrier électronique selon la revendication 7 ou 8, comprenant des moyens de numérisation de document (44), **caractérisée en ce que** les moyens de traitement (40, 42, 50, 52) sont configurés pour envoyer un document numérisé par les moyens de numérisation de document dans un courrier électronique.

10. Machine de télécopie de courrier électronique, selon l'une quelconque des revendications précédentes comprenant :
une partie de numérisation (44) pour numériser des documents afin de produire des données d'image de documents ;
une unité d'envoi de courrier électronique (40) pour générer des courriers électroniques incluant des données d'image de documents produites par les moyens de numérisation et pour envoyer les courriers électroniques, générés par elle-même, au serveur de courriers électroniques (70) ; et
une unité d'ajout d'opération de post-traitement (42) pour ajouter une instruction de traitement à un courrier électronique à envoyer.

11. Machine de télécopie de courrier électronique selon la revendication 10, **caractérisée en ce que** l'unité d'ajout d'opération de post-traitement (42) ajoute des instructions de traitement dans des en-têtes non normalisés.

12. Machine de télécopie de courrier électronique selon la revendication 11, **caractérisée en ce que** l'unité d'envoi de courrier électronique est configurée pour envoyer des messages électroniques se conformant à la norme RFC2822.

13. Machine de télécopie de courrier électronique selon la revendication 12, **caractérisée en ce que** l'unité d'ajout d'opération de post-traitement (42) est configurée de sorte que l'en-tête non normalisé soit un en-tête n'ayant pas une fonction définie dans la norme RCF2822.

14. Machine de télécopie de courrier électronique comprenant ;
une partie de numérisation (44) pour numériser des documents afin de produire des données d'image de documents ;
une unité d'envoi de courrier électronique (40) pour générer des courriers électroniques incluant des données d'image de document produites par la partie de numérisation et pour envoyer les courriers électroniques, générés par elle-même, au serveur de courriers électroniques (70) ; et
une unité d'ajout d'opération de post-traitement (42) pour ajouter une instruction de traitement à un courrier électronique à envoyer,
**caractérisée en ce que**
ladite instruction de traitement est une instruction pour communiquer avec un serveur de courriers électroniques (70) afin d'effectuer une opération associée, dans laquelle ladite opération comprend le transfert du courrier électronique vers une adresse électronique spécifiée comme un paramètre de ladite instruction de traitement prédéterminée, ou la suppression du courrier électronique d'une boîte aux lettres électronique sur le serveur de courriers électroniques (70) à partir duquel le courrier électronique a été téléchargé.

15. Machine de télécopie de courrier électronique selon la revendication 14, **caractérisée en ce que** l'unité d'ajout d'opération de post-traitement (42) ajoute des instructions de traitement dans des en-têtes non normalisés.

16. Machine de télécopie de courrier électronique selon la revendication 15, **caractérisée en ce que** l'unité d'envoi de courrier électronique est configurée pour envoyer des messages électroniques se conformant à la norme RFC2822.

17. Machine de télécopie de courrier électronique selon la revendication 16, **caractérisée en ce que** l'unité d'ajout d'opération de post-traitement (42) est configurée de telle sorte que l'en-tête non normalisé soit un en-tête n'ayant pas une fonction définie dans la norme RFC2822.

18. Procédé d'envoi d'une télécopie de courrier électronique comprenant la réception d'un menu d'envoi de courrier électronique entré par un utilisateur, la réception d'une information d'adresse entrée par un utilisateur pour un courrier électronique à envoyer, la réception d'une entrée utilisateur sélectionnant une instruction de traitement pour le courrier électronique à envoyer, la réception d'une information d'entrée nécessaire pour l'instruction de traitement sélectionnée et l'envoi du courrier électronique vers un serveur de courriers électroniques (70), **caractérisé en ce que** l'instruction de traitement sélectionnée est une instruction afin de communiquer avec un serveur de courriers électroniques (70) de façon à effectuer une opération associée, dans lequel ladite opération comprend le transfert du courrier électronique vers une adresse électronique spécifiée en tant que paramètre de ladite instruction de traitement prédéterminée, ou la suppression du courrier électronique d'une boîte aux lettres sur le serveur de courriers électroniques (70) à partir duquel le courrier électronique a été téléchargé.

19. Procédé selon la revendication 18, **caractérisé en ce que** l'instruction de traitement sélectionnée par l'utilisateur est ajoutée au courrier électronique dans un en-tête non normalisé.

20. Procédé selon la revendication 19, dans lequel le courrier électronique se conforme à la norme RFC2822.

21. Procédé selon la revendication 20, **caractérisé en ce que** l'en-tête non normalisé est un en-tête n'ayant pas une fonction définie dans la norme RFC2822.

22. Procédé de réception d'une télécopie de courrier électronique comprenant l'utilisation d'une machine de télécopie de courrier électronique pour recevoir un courrier électronique à partir d'un serveur de courriers électroniques (70) et utilisant la machine de télécopie de courrier électronique pour vérifier s'il y a une instruction de traitement dans le courrier électronique reçu et mettant en oeuvre l'instruction de traitement, **caractérisé en ce que** ladite instruction de traitement est une instruction pour communiquer avec un serveur de courriers électroniques (70) afin d'effectuer une opération associée, dans lequel ladite opération comprend le transfert du courrier électronique vers une adresse électronique spécifiée comme un paramètre de ladite instruction de traitement prédéterminée, ou la suppression du courrier électronique d'une boîte aux lettres sur le serveur de courriers électroniques (70) à partir duquel le courrier électronique a été téléchargé.

23. Procédé selon la revendication 22, comprenant la mémorisation de l'instruction de traitement puis l'impression des contenus du courrier électronique avant la mise en oeuvre de l'instruction de traitement.

24. Procédé selon la revendication 22 ou 23, comprenant la vérification pour savoir si une instruction de traitement est dans un en-tête non normalisé du courrier électronique reçu.

25. Procédé selon la revendication 24, **caractérisé en ce que** le courrier électronique reçu se conforme à la norme RFC2822.

26. Procédé selon la revendication 25, **caractérisé en ce que** l'en-tête non normalisé est un en-tête n'ayant pas de fonction définie dans la norme RFC2822.
